# DEMANDE DE BREVET EUROPEEN

(11) **EP 4 814 644 A1**
(43) Date de publication de la demande: **30.09.2026**
(21) Numéro de dépôt: 26166661.4
(22) Date de dépôt: 23.03.2026
(51) Int. Cl.: G05D 1/485, G05D 1/65, G05D 105/22, G05D 107/13, G05D 109/22, B64D 31/00, B64D 31/04, B64D 43/02

(54) **PROCEDE DE GESTION DE LA POUSSEE ET DE LA VITESSE D'UN AERONEF**

(30) Priorité: 25.03.2025 FR 2503038
(71) Demandeur: Airbus Operations S.A.S., 31060 Toulouse (FR)
(72) Inventeur: PRESSEQ, Xavier, 31060 TOULOUSE (FR); DEMORTIER, Jean-Pierre, 31060 TOULOUSE (FR); BONDOUY, Manon, 31060 TOULOUSE (FR)
(74) Mandataire: Cabinet Le Guen Maillet

(57) **Abrégé**

Procédé de gestion de la poussée et de la vitesse d'un aéronef, comportant, pour au moins une phase de vol comprenant une variation d'altitude : recevoir (501) un profil de poussée et de vitesse comprenant, pour chacune d'une pluralité de tranches d'altitudes, des valeurs cibles de poussée et de vitesse ; calculer (504), en fonction du profil de poussée et de vitesse et d'une altitude courante de l'aéronef, des consignes de poussée et de vitesse ; transmettre (506) la consigne de poussée à un système de contrôle moteur pour agir sur un moteur ; et transmettre (507) la consigne de vitesse à un système de contrôle de vol pour agir sur des gouvernes. La solution proposée permet d'améliorer la gestion de la poussée et de la vitesse de l'aéronef et donc de réduire la dégradation du moteur.

## Description

### DOMAINE TECHNIQUE

La présente invention concerne un procédé de gestion de la poussée et de la vitesse d'un aéronef dans une phase de vol de l'aéronef comprenant une variation d'altitude (notamment la phase de montée, ou encore une phase de changement de niveaux de vol planifiée au cours de la phase de croisière).

La présente invention concerne également un système de gestion de vol (ou FMS, pour « Flight Management System » en anglais), embarqué dans l'aéronef et adapté à la mise en œuvre d'un tel procédé, ainsi qu'un produit programme d'ordinateur et un support de stockage permettant la mise en œuvre d'un tel procédé.

### ETAT DE LA TECHNIQUE ANTERIEURE

La phase de montée d'un aéronef (qui suit la phase de décollage et précède la phase de croisière) est généralement effectuée en sélectionnant un régime moteur maximal de montée nommé « Max Climb », qui est calibré pour obtenir des caractéristiques de trajectoire de montée satisfaisantes, en termes d'acquisition de l'altitude de montée et de temps de montée en particulier, pour la masse maximale de l'aéronef.

Lorsque l'aéronef est opéré avec le régime moteur « Max Climb » à une masse moyenne ou faible, les caractéristiques de montée peuvent être largement supérieures au juste nécessaire. De plus, le régime moteur « Max Climb » étant élevé, et considérant que la dégradation du moteur (système propulsif) de l'aéronef est fonction du niveau de poussée, il engendre une dégradation du moteur. En d'autres termes, le régime moteur « Max Climb » conduit à une utilisation du moteur à un régime élevé pour chaque opération et quelles que soient les conditions du jour et la masse avion, accentuant la dégradation du moteur. Considérant que la dégradation du moteur est accentuée par des niveaux de poussée élevés, l'utilisation du régime moteur « Max Climb » pour chaque cycle de vol implique que ce régime est un facteur significativement dimensionnant de la dégradation du moteur et donc de sa durée de vie.

De façon optionnelle, des régimes réduits, nommés « Fixed Derate Climb », avec des niveaux inférieurs au niveau maximal du régime « Max Climb », peuvent être proposés au pilote. Il est du ressort du pilote de sélectionner manuellement un des régimes réduits, en fonction des conditions particulières de masse ainsi que des contraintes aéroportuaires et environnementales du jour.

L'utilisation d'un des régimes réduits « Fixed Derate Climb » permet un premier niveau de réduction de la dégradation moteur, mais reste une solution non optimale car le pilote n'a pas connaissance du régime le plus adapté aux conditions de masses, aéroports et atmosphériques du jour. De plus, les contraintes locales du jour peuvent amener à la sélection d'un régime réduit évolutif tout au long de la phase de montée. La sélection d'un des régimes réduits est effectuée lors de la phase de préparation du vol. La modification du niveau de réduction (« Derate ») pendant la phase de montée nécessite des opérations manuelles de la part du pilote, sans avoir connaissance du régime moteur optimal pour les conditions du jour. L'action naturelle du pilote est de désélectionner le régime réduit « Fixed Derate Climb » durant la montée pour passer sur le régime « Max Climb ».

De façon alternative, des lois de contrôle moteur avancées (nommées « Auto Derate Climb »), prenant en compte la masse de décollage du jour de l'aéronef, ont été mises au point de façon à réduire la poussée lorsque la masse de l'aéronef est inférieure à la masse maximale. Ces lois sont prédéterminées pour un type d'aéronef/moteur. Ces lois de contrôle avancées sont proposées en complément du régime moteur « Max Climb » et sont activables et désactivables par le pilote.

L'utilisation des lois de contrôle moteur avancées « Auto Derate Climb » ne permet pas de garantir le respect des différentes contraintes du jour, ce qui peut conduire le pilote à sélectionner le régime « Max Climb », perdant ainsi le bénéfice sur la durée de vie du moteur.

Les solutions connues précitées (régime maximal « Max Climb », régimes réduits « Fixed Derate Climb » et lois de contrôle moteur avancées « Auto Derate Climb ») donnent satisfaction, mais il existe un besoin de les améliorer encore.

### EXPOSE DE L'INVENTION

Il est proposé un procédé de gestion de la poussée et de la vitesse d'un aéronef, le procédé étant implémenté par un système de gestion de vol embarqué dans l'aéronef et comprenant une circuiterie électronique, le procédé comportant, pour au moins une phase de vol de l'aéronef comprenant une variation d'altitude dans une plage déterminée de valeurs d'altitude :
- recevoir un profil de poussée et de vitesse comprenant, pour chaque tranche d'altitudes parmi une pluralité de tranches d'altitudes de la plage déterminée de valeurs d'altitude, une valeur cible de poussée et une valeur cible de vitesse ;
- calculer (504), en fonction du profil de poussée et de vitesse et d'une altitude courante de l'aéronef, une consigne de poussée et une consigne de vitesse ;
- transmettre la consigne de poussée à un système de contrôle moteur embarqué dans l'aéronef et configuré pour agir sur un moteur de l'aéronef en fonction de la consigne de poussée ; et
- transmettre la consigne de vitesse à un système de contrôle de vol embarqué dans l'aéronef et configuré pour agir sur des gouvernes de l'aéronef en fonction de la consigne de vitesse.

Ainsi, la solution proposée repose sur la fourniture d'un profil de poussée et de vitesse au système de gestion du vol (FMS) de l'aéronef, qui l'utilise pour élaborer automatiquement des consignes de poussée et de vitesse. La solution proposée permet d'améliorer la gestion de la poussée et de la vitesse d'un aéronef pendant la phase de montée (ou toute autre phase de vol de l'aéronef comprenant une variation d'altitude), tout en respectant les différentes contraintes liées à cette phase de montée et en simplifiant l'opération du pilote dans cette gestion. Cette amélioration de la gestion de la poussée et de la vitesse de l'aéronef permet de réduire la dégradation (l'usure) du moteur, en réduisant les températures internes de fonctionnement. Cette réduction de l'usure moteur permet elle-même de réduire les cycles de maintenance du moteur et les coûts associés, et par conséquent d'améliorer les disponibilités des aéronefs pour les opérateurs.

Selon un mode de réalisation particulier, ladite au moins une phase de vol, comprenant une variation d'altitude, appartient à un groupe comprenant :
- une phase de montée jusqu'à une altitude de croisière ; et
- une phase de changement de niveaux de vol, planifiée au cours d'une phase de croisière.

Selon un mode de réalisation particulier, le calcul de la consigne de poussée et de la consigne de vitesse comprend :
- calculer une trajectoire de montée prévue, de l'aéronef, en fonction du profil de poussée et de vitesse et de caractéristiques de performance de l'aéronef ; et
- calculer la consigne de poussée et la consigne de vitesse en fonction de la trajectoire de montée prévue.

Selon un mode de réalisation particulier, le procédé comporte : calculer une consommation de carburant prévue, de l'aéronef, en fonction du profil de poussée et de vitesse et des caractéristiques de performance de l'aéronef.

Selon un mode de réalisation particulier, le profil de poussée et de vitesse est fonction d'au moins un paramètre appartenant à un groupe comprenant :
- un paramètre de consommation de carburant par l'aéronef ;
- un paramètre de niveau d'émission acoustique par l'aéronef ;
- un paramètre de niveau d'émission de polluant par l'aéronef ;
- un paramètre de coût de maintenance moteur pour l'aéronef ;
- un paramètre de contrainte liée au contrôle aérien pour atteindre une phase de croisière qui suit une phase de montée ;
- un paramètre de contrainte aéroportuaire pour la phase de montée ;
- un paramètre de contrainte environnementale liées à des particules présentes dans l'atmosphère ;
- un paramètre de météorologie ; et
- un paramètre lié à une caractéristique de performance de l'aéronef.

Selon un mode de réalisation particulier, la réception du profil de poussée et de vitesse est effectuée avec une interface comprise dans le système de gestion de vol et appartenant à un groupe comprenant :
- une interface homme-machine de saisie du profil de poussée et de vitesse par le pilote ou une autre personne présente dans l'aéronef ;
- une interface de réception du profil de poussée et de vitesse transmis par un dispositif embarqué dans l'aéronef, notamment une tablette ; et
- une interface de réception du profil de poussée et de vitesse transmis par un dispositif au sol.

Selon un mode de réalisation particulier, pour chaque tranche d'altitudes, la valeur cible de poussée est sélectionnée parmi une pluralité de valeurs de poussée d'un ensemble appartenant à un groupe comprenant :
- un premier ensemble de valeurs de poussée correspondant chacune à un régime moteur distinct parmi une pluralité de régimes moteur disponibles dans le système de contrôle moteur ; et
- un deuxième ensemble de valeurs de poussée correspondant chacune à un pourcentage particulier d'une valeur maximale de poussée d'un même régime moteur disponible dans le système de contrôle moteur.

Selon un mode de réalisation particulier, le procédé comporte : afficher au moins une information appartenant à un groupe comprenant :
- le profil de poussée et de vitesse ;
- la consigne de poussée et la consigne de vitesse, calculées en fonction du profil de poussée et de vitesse ;
- une trajectoire de montée prévue, calculée en fonction du profil de poussée et de vitesse ; et
- une consommation de carburant prévue, calculée en fonction du profil de poussée et de vitesse.

Il est aussi proposé un produit programme d'ordinateur, comportant des instructions entraînant l'exécution, par un processeur, du procédé évoqué ci-dessus selon l'un quelconque de ses modes de réalisation, lorsque lesdites instructions sont exécutées par le processeur.

Il est aussi proposé un support de stockage, stockant de telles instructions entraînant l'exécution, par le processeur, du procédé évoqué ci-dessus selon l'un quelconque de ses modes de réalisation, lorsque lesdites instructions sont lues depuis le support de stockage et exécutées par le processeur.

Il est aussi proposé un système de gestion de vol, embarqué dans un aéronef et comportant une circuiterie électronique configurée pour implémenter, pour au moins une phase de vol de l'aéronef comprenant une variation d'altitude dans une plage déterminée de valeurs d'altitude :
- recevoir un profil de poussée et de vitesse comprenant, pour chaque tranche d'altitudes parmi une pluralité de tranches d'altitudes de la plage déterminée de valeurs d'altitude, une valeur cible de poussée et une valeur cible de vitesse ;
- calculer, en fonction du profil de poussée et de vitesse et d'une altitude courante de l'aéronef, une consigne de poussée et une consigne de vitesse ;
- transmettre la consigne de poussée à un système de contrôle moteur embarqué dans l'aéronef et configuré pour agir sur un moteur de l'aéronef en fonction de la consigne de poussée ; et
- transmettre la consigne de vitesse à un système de contrôle de vol embarqué dans l'aéronef et configuré pour agir sur des gouvernes de l'aéronef en fonction de la consigne de vitesse.

Il est aussi proposé un aéronef comprenant un système de gestion de vol tel que présenté plus haut, et plus généralement configuré pour exécuter le procédé présenté plus haut (procédé de gestion de la poussée et de la vitesse d'un aéronef), dans l'un quelconque de ses modes de réalisation.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre schématiquement, en vue de côté, un aéronef équipé d'un système de gestion de vol (FMS) selon l'invention, configuré pour gérer la poussée et la vitesse de l'aéronef pendant une phase de montée ;
[Fig. 2] illustre schématiquement le système de gestion de vol de la Fig. 1, dans un mode de réalisation ;
[Fig. 3] illustre schématiquement un exemple d'architecture logicielle du système de gestion de vol de la Fig. 1, dans un mode de réalisation ;
[Fig. 4] illustre schématiquement un exemple d'architecture matérielle du système de gestion de vol de la Fig. 1, dans un mode de réalisation ;
[Fig. 5] illustre schématiquement un exemple d'algorithme, exécuté par le système de gestion de vol de la Fig. 1, de gestion de la poussée et la vitesse de l'aéronef pendant une phase de montée ; et
[Fig. 6] illustre schématiquement un exemple de profil de poussée et de vitesse selon un mode de réalisation.

### EXPOSE DETAILLE DE MODES DE REALISATION

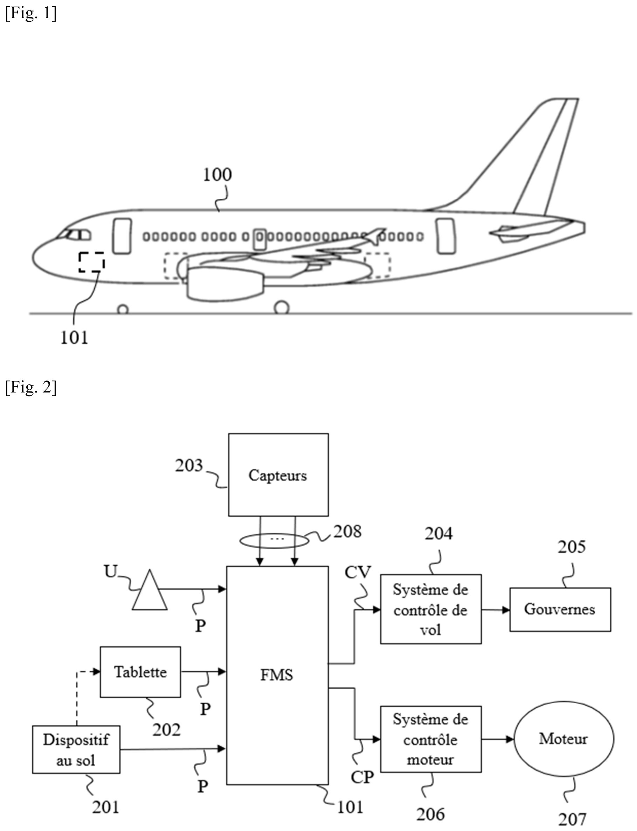

La **Fig. 1** illustre schématiquement, en vue de côté, un aéronef 100 équipé d'un système de gestion de vol (FMS) 101 selon l'invention, c'est-à-dire configuré pour gérer la poussée et la vitesse de l'aéronef pendant la phase de montée (ou toute autre phase de vol de l'aéronef comprenant une variation d'altitude).

Dans le mode de réalisation illustré sur la **Fig. 2****,** le système de gestion de vol (FMS) 101 reçoit un profil de poussée et de vitesse P. Dans un souci de simplification, les trois modes de réalisation suivants sont illustrés sur la Fig. 2 :
- dans un premier mode de réalisation, le profil de poussée et de vitesse P est fourni par le pilote U (qui en dispose par exemple grâce au dossier de préparation de vol), via une interface homme-machine de saisie (saisie manuelle par exemple). Par exemple, en phase de préparation du vol, l'aéronef étant à l'arrêt au sol, le pilote introduit le profil de poussée et de vitesse dans le système de gestion de vol (FMS) par l'intermédiaire d'une interface dédiée permettant de renseigner l'ensemble de paramètres de réglage de la phase de montée ;
- dans un deuxième mode de réalisation, le profil de poussée et de vitesse P est fourni par un dispositif embarqué dans l'aéronef, par exemple une tablette 202 ; et
- dans un troisième mode de réalisation, le profil de poussée et de vitesse P est fourni par un dispositif au sol 201, soit directement soit via la tablette 202.

Le système de gestion de vol 101 reçoit des mesures de divers paramètres 208 représentatifs de l'état de l'aéronef (par exemple : vitesse, altitude, température de l'air, etc.), fournies par des capteurs 203 dont est équipé l'aéronef.

Comme détaillé par la suite, en fonction du profil de poussée et de vitesse P et des divers paramètres d'état 208 (notamment l'altitude courante de l'aéronef), le système de gestion de vol 101 calcule une consigne de poussée CP et une consigne de vitesse CV. La consigne de poussée CP comprend par exemple des valeurs d'un ou plusieurs paramètres de contrôle moteur : régime de rotation, niveau de puissance, température de consigne moteur, niveau de réduction de poussée par rapport à la poussée maximale disponible, etc.

Le système de gestion de vol 101 transmet la consigne de poussée CP à un système de contrôle moteur 206, embarqué dans l'aéronef 100 et configuré pour agir sur un moteur 207 de l'aéronef en fonction de la consigne de poussée CP. Le système de contrôle moteur 206 ajuste le niveau de débit carburant ou le niveau de puissance afin d'obtenir la poussée moteur demandée.

Le système de gestion de vol 101 transmet la consigne de vitesse CV à un système de contrôle de vol 204, également embarqué dans l'aéronef et configuré pour agir sur des gouvernes 205 de l'aéronef 100 en fonction de la consigne de vitesse CV. Le système de contrôle de vol 204 calcule les ordres de braquage de chacune des gouvernes aérodynamiques de façon à maintenir l'aéronef sur la consigne de vitesse reçue.

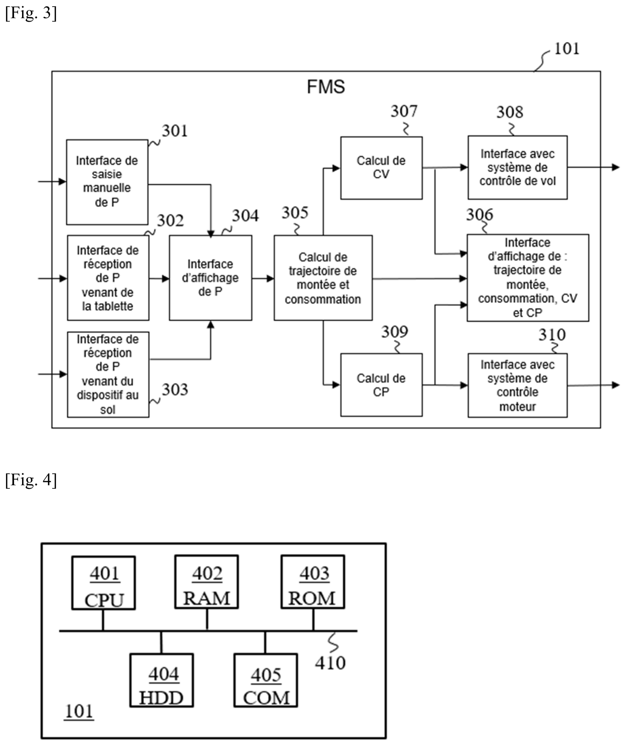

La **Fig. 3** illustre schématiquement un exemple d'architecture logicielle du système de gestion de vol (FMS) 101, qui comprend alors :
- pour recevoir le profil de poussée et de vitesse P, un ou plusieurs des trois modules d'interface suivants :
   ∘ un module 301 d'interface homme-machine de saisie du profil de poussée et de vitesse P par le pilote U (ou une autre personne présente dans l'aéronef) ;
   ∘ un module 302 d'interface de réception du profil de poussée et de vitesse P transmis par la tablette 202 (ou un autre dispositif embarqué dans l'aéronef) ; et
   ∘ un module 303 d'interface de réception du profil de poussée et de vitesse P transmis (directement) par le dispositif au sol 201 ;
- un module 304 d'interface d'affichage du profil de poussée et de vitesse P ;
- un module 305 de calcul d'une trajectoire de montée prévue et d'une consommation de carburant prévue, de l'aéronef, en fonction du profil de poussée et de vitesse P et de caractéristiques de performance de l'aéronef 100 ;
- un module 307 de calcul de la consigne de vitesse CV en fonction de la trajectoire de montée prévue ;
- un module 308 d'interface avec le système de contrôle de vol 204, pour lui fournir la consigne de vitesse (voir description de la Fig. 2) ;
- un module 309 de calcul de la consigne de poussée CP en fonction de la trajectoire de montée prévue ;
- un module 310 d'interface avec le système de contrôle moteur 206, pour lui fournir la consigne de poussée (voir description de la Fig. 2) ; et
- un module 306 d'interface d'affichage de la trajectoire de montée prévue, de la consommation de carburant prévue, de la consigne de vitesse CV et de la consigne de poussée CP.

La **Fig. 4** illustre schématiquement un exemple d'architecture matérielle du système de gestion de vol (FMS) 101, qui comprend alors, reliés par un bus de communication 410 : un processeur ou CPU (« Central Processing Unit » en anglais) 401 ; une mémoire vive RAM (« Random Access Memory » en anglais) 402 ; une mémoire morte ROM (« Read Only Memory » en anglais) 403, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 404 ; au moins une interface de communication 405 permettant au système de gestion de vol 101 d'interagir dans l'avionique de l'aéronef 100.

Le processeur 401 est capable d'exécuter des instructions qui forment un programme d'ordinateur et qui sont chargées dans la RAM 402 à partir de la ROM 403, d'une mémoire externe (non représentée), d'un autre support de stockage (tel qu'une carte SD), ou d'un réseau de communication (non représenté). Lorsque le système de gestion de vol 101 est mis sous tension, le processeur 401 est capable de lire de la RAM 402 les instructions précitées et de les exécuter. Quand elles sont lues (depuis la RAM 402 ou un support de stockage) et exécutées par le processeur 401, ces instructions (qui forment un programme d'ordinateur) entraînent l'exécution, par le processeur 401, des comportements, étapes et algorithme décrits ici.

Tout ou partie des comportements, étapes et algorithme décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système de gestion de vol 101 comprend de la circuiterie électronique agencée et configurée pour implémenter les comportements, étapes et algorithme décrits ici.

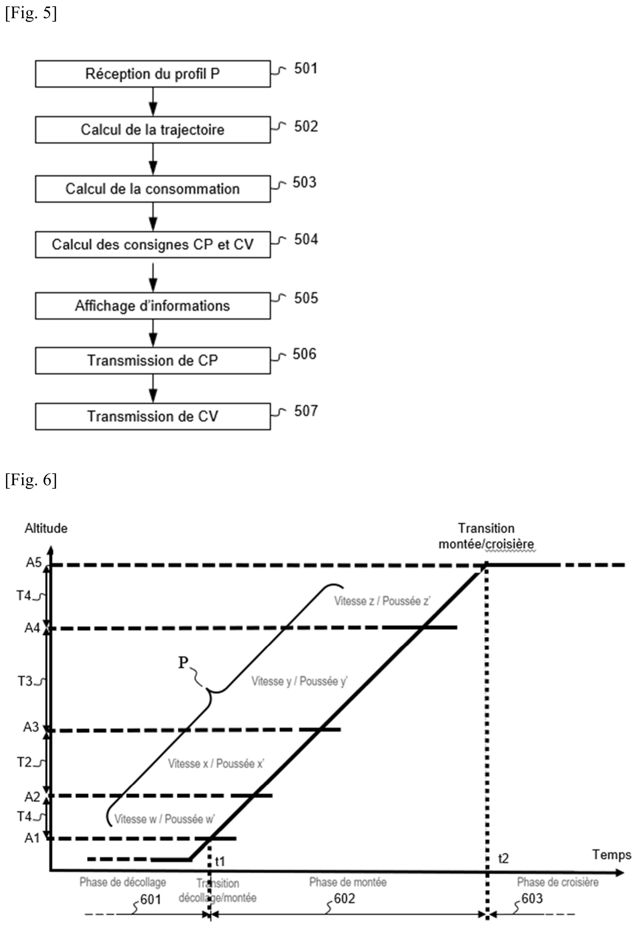

La **Fig. 5** illustre schématiquement un exemple d'algorithme de gestion de la poussée et la vitesse de l'aéronef pendant une phase de montée. Cet algorithme est exécuté par le système de gestion de vol (FMS) 101, pour une ou plusieurs phases de vol de l'aéronef comprenant une variation d'altitude dans une plage déterminée de valeurs d'altitude. Par exemple, il est exécuté pour la phase de montée jusqu'à une altitude de croisière (voir l'exemple de la Fig. 6)), ainsi que pour chaque phase de changement de niveaux de vol planifiée au cours de la phase de croisière (changements de type « Step Climb »).

Dans une étape 501, le système de gestion de vol 101 reçoit, via une de ses interfaces 301 à 303, voir Fig. 3), un profil de poussée et de vitesse P comprenant, pour chaque tranche d'altitudes parmi une pluralité de tranches d'altitudes de la plage déterminée de valeurs d'altitude (par exemple pour la phase de montée), une valeur cible de poussée et une valeur cible de vitesse. Dans une tranche d'altitudes donnée, les valeurs cibles de poussée et de vitesse sont considérées constantes.

La **Fig. 6** illustre schématiquement un exemple de profil de poussée et de vitesse P selon un mode de réalisation. L'altitude est représentée en ordonnée et le temps en abscisse. La phase de montée 602 est comprise entre les instants t1 (instant de transition entre la phase de décollage 601 et la phase de montée 602) et t2 (instant de transition entre la phase de montée 602 et la phase de croisière 603). Pour la phase de montée 602, le profil de poussée et de vitesse P comprend :
- pour la tranche d'altitude T1 (de l'altitude A1 à l'altitude A2), la valeur cible de vitesse w et la valeur cible de poussée w' ;
- pour la tranche d'altitude T2 (de l'altitude A2 à l'altitude A3), la valeur cible de vitesse x et la valeur cible de poussée x' ;
- pour la tranche d'altitude T3 (de l'altitude A3 à l'altitude A4), la valeur cible de vitesse y et la valeur cible de poussée y' ; et
- pour la tranche d'altitude T4 (de l'altitude A4 à l'altitude A5), la valeur cible de vitesse z et la valeur cible de poussée z'.

Dans d'autres exemples, le nombre de tranches d'altitude peut être différent.

Dans un mode de réalisation, pour chaque tranche d'altitudes, la valeur cible de poussée est sélectionnée parmi un ensemble de valeurs de poussée correspondant chacune à un régime moteur distinct parmi une pluralité de régimes moteur disponibles dans le système de contrôle moteur 206. Dans un autre mode de réalisation, pour chaque tranche d'altitudes, la valeur cible de poussée est sélectionnée parmi un ensemble de valeurs de poussée correspondant chacune à un pourcentage particulier d'une valeur maximale de poussée d'un même régime moteur disponible dans le système de contrôle moteur 206.

Le profil de poussée et de vitesse P peut être optimisé (par exemple dans la tablette 202 ou dans le dispositif au sol 201), en déterminant les valeurs cibles de poussée et de vitesse de chaque tranche d'altitude en fonction d'un ou plusieurs paramètres, par exemple parmi :
- des critères déterminés par la compagnie aérienne :
   ∘ un paramètre de consommation de carburant par l'aéronef ;
   ∘ un paramètre de niveau d'émission acoustique par l'aéronef ;
   ∘ un paramètre de niveau d'émission de polluant (par exemple CO2, NOx, etc.) par l'aéronef ;
   ∘ un paramètre de coût de maintenance moteur pour l'aéronef ;
- des contraintes :
   ∘ un paramètre de contrainte liée au contrôle aérien pour atteindre la phase de croisière ;
   ∘ un paramètre de contrainte aéroportuaire pour la phase de montée (pente minimale, altitude et/ou vitesse minimale(s) sur des points géographique, etc.) ;
   ∘ un paramètre de contrainte environnementale liées à des particules présentes dans l'atmosphère (sable, sel, polluants chimiques, etc.) ;
   ∘ un paramètre de météorologie (température, vent, etc.) ; et
- des caractéristiques de performance de l'aéronef (sur la base d'un modèle de « performances aéronef »).

De retour à la description de la Fig. 5, dans une étape 502, le système de gestion de vol 101 calcule une trajectoire de montée prévue de l'aéronef, en fonction du profil de poussée et de vitesse P et de caractéristiques de performance de l'aéronef 100.

Dans une étape 503, le système de gestion de vol 101 calcule une consommation de carburant prévue de l'aéronef, en fonction du profil de poussée et de vitesse P et de caractéristiques de performance de l'aéronef 100.

Dans une étape 504, le système de gestion de vol 101 calcule les consignes de vitesse CV et de poussée CP en fonction de la trajectoire de montée prévue.

Dans une étape 505, le système de gestion de vol 101 affiches diverses informations, par exemple : le profil de poussée et de vitesse P, la trajectoire de montée prévue, la consommation de carburant prévue, les consignes de vitesse CV et de poussée CP.

Dans une étape 506, le système de gestion de vol 101 transmet la consigne de poussée CP au système de contrôle de vol 204, afin que ce dernier agisse sur les gouvernes 205 de l'aéronef 100 en fonction de cette consigne de poussée CP.

Dans une étape 507, le système de gestion de vol 101 transmet la consigne de vitesse au système de contrôle moteur 206, afin que ce dernier agisse sur le moteur 207 de l'aéronef en fonction de cette consigne de vitesse CV.

## Revendications

1. Procédé de gestion de la poussée et de la vitesse d'un aéronef (100), le procédé étant implémenté par un système de gestion de vol (FMS, 101) embarqué dans l'aéronef et comprenant une circuiterie électronique, le procédé comportant, pour au moins une phase de vol de l'aéronef comprenant une variation d'altitude dans une plage déterminée de valeurs d'altitude :
- recevoir (501) un profil de poussée et de vitesse (P) comprenant, pour chaque tranche d'altitudes parmi une pluralité de tranches d'altitudes de la plage déterminée de valeurs d'altitude, une valeur cible de poussée et une valeur cible de vitesse ;
- calculer (504), en fonction du profil de poussée et de vitesse et d'une altitude courante de l'aéronef, une consigne de poussée (CP) et une consigne de vitesse (CV) ;
- transmettre (506) la consigne de poussée à un système de contrôle moteur (206) embarqué dans l'aéronef et configuré pour agir sur un moteur (207) de l'aéronef en fonction de la consigne de poussée ; et
- transmettre (507) la consigne de vitesse à un système de contrôle de vol (204) embarqué dans l'aéronef et configuré pour agir sur des gouvernes (205) de l'aéronef en fonction de la consigne de vitesse.

2. Procédé selon la revendication 1, dans lequel ladite au moins une phase de vol, comprenant une variation d'altitude, est :
- une phase de montée jusqu'à une altitude de croisière (A5) ; ou
- une phase de changement de niveaux de vol, planifiée au cours d'une phase de croisière.

3. Procédé selon l'une quelconque des revendications 1 et 2, dans lequel le calcul de la consigne de poussée et de la consigne de vitesse comprend :
- calculer (502) une trajectoire de montée prévue, de l'aéronef, en fonction du profil de poussée et de vitesse et de caractéristiques de performance de l'aéronef ; et
- calculer (504) la consigne de poussée et la consigne de vitesse en fonction de la trajectoire de montée prévue.

4. Procédé selon l'une quelconque des revendications 1 à 3, comportant : calculer (503) une consommation de carburant prévue, de l'aéronef, en fonction du profil de poussée et de vitesse et des caractéristiques de performance de l'aéronef.

5. Procédé selon l'une quelconque des revendications 1 à 4, dans lequel le profil de poussée et de vitesse (P) est fonction d'au moins un paramètre appartenant à un groupe comprenant :
- un paramètre de consommation de carburant par l'aéronef ;
- un paramètre de niveau d'émission acoustique par l'aéronef ;
- un paramètre de niveau d'émission de polluant par l'aéronef ;
- un paramètre de coût de maintenance moteur pour l'aéronef ;
- un paramètre de contrainte liée au contrôle aérien pour atteindre une phase de croisière qui suit une phase de montée ;
- un paramètre de contrainte aéroportuaire pour la phase de montée ;
- un paramètre de contrainte environnementale liée à des particules présentes dans l'atmosphère ;
- un paramètre de météorologie ; et
- un paramètre lié à une caractéristique de performance de l'aéronef.

6. Procédé selon l'une quelconque des revendications 1 à 5, dans lequel la réception (501) du profil de poussée et de vitesse est effectuée avec une interface comprise dans le système de gestion de vol (101) et appartenant à un groupe comprenant :
- une interface homme-machine (301) de saisie du profil de poussée et de vitesse par le pilote (U) ou une autre personne présente dans l'aéronef ;
- une interface (302) de réception du profil de poussée et de vitesse transmis par un dispositif embarqué dans l'aéronef, notamment une tablette (202) ; et
- une interface (303) de réception du profil de poussée et de vitesse transmis par un dispositif au sol (201).

7. Procédé selon l'une quelconque des revendications 1 à 6, dans lequel, pour chaque tranche d'altitudes, la valeur cible de poussée est sélectionnée parmi une pluralité de valeurs de poussée d'un ensemble appartenant à un groupe comprenant :
- un premier ensemble de valeurs de poussée correspondant chacune à un régime moteur distinct parmi une pluralité de régimes moteur disponibles dans le système de contrôle moteur ; et
- un deuxième ensemble de valeurs de poussée correspondant chacune à un pourcentage particulier d'une valeur maximale de poussée d'un même régime moteur disponible dans le système de contrôle moteur.

8. Procédé selon l'une quelconque des revendications 1 à 7, comportant : afficher (505) au moins une information appartenant à un groupe comprenant :
- le profil de poussée et de vitesse ;
- la consigne de poussée et la consigne de vitesse, calculées en fonction du profil de poussée et de vitesse ;
- une trajectoire de montée prévue, calculée en fonction du profil de poussée et de vitesse ; et
- une consommation de carburant prévue, calculée en fonction du profil de poussée et de vitesse.

9. Produit programme d'ordinateur, comportant des instructions entraînant l'exécution, par un processeur (401), du procédé selon l'une quelconque des revendications 1 à 8, lorsque lesdites instructions sont exécutées par le processeur.

10. Support de stockage, stockant un programme d'ordinateur comportant des instructions entraînant l'exécution, par un processeur (401), du procédé selon l'une quelconque des revendications 1 à 8, lorsque lesdites instructions sont lues depuis le support de stockage et exécutées par le processeur.

11. Système de gestion de vol (FMS, 101), embarqué dans un aéronef (100) et comportant une circuiterie électronique configurée pour implémenter, pour au moins une phase de vol de l'aéronef comprenant une variation d'altitude dans une plage déterminée de valeurs d'altitude :
- recevoir un profil de poussée et de vitesse comprenant, pour chaque tranche d'altitudes parmi une pluralité de tranches d'altitudes de la plage déterminée de valeurs d'altitude, une valeur cible de poussée et une valeur cible de vitesse ;
- calculer, en fonction du profil de poussée et de vitesse et d'une altitude courante de l'aéronef, une consigne de poussée et une consigne de vitesse ;
- transmettre la consigne de poussée à un système de contrôle moteur embarqué dans l'aéronef et configuré pour agir sur un moteur de l'aéronef en fonction de la consigne de poussée ; et
- transmettre la consigne de vitesse à un système de contrôle de vol embarqué dans l'aéronef et configuré pour agir sur des gouvernes de l'aéronef en fonction de la consigne de vitesse.

12. Aéronef (100) comprenant un système de gestion de vol (FMS, 101) selon la revendication 11.
